# EUROPÄISCHE PATENTSCHRIFT

(11) **EP 3 519 530 B1**
(45) Veröffentlichungstag und Bekanntmachung des Hinweises auf die Patenterteilung: **02.12.2020**
(21) Anmeldenummer: 16778745.6
(22) Anmeldetag: 30.09.2016
(51) Int. Cl.: C09K 8/80, C08J 7/04

(54) **BESCHICHTETE STÜTZMITTEL FÜR FRACKING-FÖRDERVERFAHREN**
COATED SUPPORT MEANS FOR FRACKING MINING METHODS
AGENTS DE SOUTÈNEMENT REVÊTUS POUR PROCÉDÉ DE FORAGE PAR FRACTURATION HYDRAULIQUE

(43) Veröffentlichungstag der Anmeldung: 07.08.2019
(73) Patentinhaber: Wacker Chemie AG, 81737 München (DE)
(72) Erfinder: BASTELBERGER, Thomas, 84547 Emmerting (DE); HASHEMZADEH, Abdulmajid, 84489 Burghausen (DE); KARPFHAMMER, Stephan, 84533 Stammham (DE); SCHLOSSER, Arndt, 84533 Stammham (DE)
(74) Vertreter: Schuderer, Michael
(86) Internationale Anmeldenummer: PCT/EP2016/073482
(87) Internationale Veröffentlichungsnummer: WO 2018/059714

(56) Entgegenhaltungen:
- EP-A2- 1 153 979
- WO-A1-2011/058051
- DE-A1- 4 436 047
- US-A1- 2014 083 696
- US-A1- 2014 124 200

## Beschreibung

Die vorliegende Erfindung betrifft beschichtete Stützmittel enthaltend ein anorganisches Trägermaterial und ein Polymerisat aus ethylenisch ungesättigten Monomeren zu dessen Beschichtung, Verfahren zur Herstellung der beschichteten Stützmittel und die Verwendung der beschichteten Stützmittel in Fracking-Förderverfahren für Erdöl und Erdgas.

Das Fracking-Verfahren wird in der Erdöl- und Erdgasförderung eingesetzt und ist eine Methode zur Erzeugung, Weitung und Stabilisierung von Rissen im Gestein einer Lagerstätte im tiefen Untergrund, mit dem Ziel, die Permeabilität der Lagerstättengesteine zu erhöhen. Dadurch können darin befindliche Gase oder Flüssigkeiten leichter und beständiger zur Bohrung fließen und gewonnen werden.

Die erzeugten Risse müssen mit Stützmitteln offengehalten werden. Die derzeit verfügbaren, beschichteten oder unbeschichteten Stützmittel sind spröde und weisen nicht die notwendige Druckfestigkeit auf für die Förderung in großen Tiefen. Durch das Brechen des Stützmittels unter dem hohen Druck werden Feinteile frei, die die Risse verstopfen und die Öl- bzw. Gasfördermenge reduzieren.

Die nach dem Stand der Technik verfügbaren beschichteten Stützmittel weisen eine im Vergleich zu den unbeschichteten Stützmitteln verbesserte Beständigkeit auf. Der Effekt der Beschichtung, zum Beispiel mit organischen Harzen, ist aber dadurch limitiert, dass die verfügbaren Beschichtungen selbst sehr spröde sind und ebenfalls zum Bruch oder zur Abplatzung neigen.

Das Patent US 4,969,522 beschreibt mit Polymerisat beschichtete Stützmittel, welche mittels Polymerisation von mehrfach ethylenisch ungesättigten Monomeren in Gegenwart von Silikagel oder Sand hergestellt werden. Das Patent US 5,218,038 betrifft mit vernetzbaren Phenolharzen beschichtete Stützmittel. Aus der US 2005/0244641 A1 sind Stützmittel bekannt, welche mit hydrophoben Materialien wie Silikone oder Siloxane beschichtet sind. Stützmittel zur Verwendung im Fracking werden auch in der US 2006/0035790 A1 beschrieben, wobei feinteilige Trägerpartikel aus Sand mit Elastomer, beispielsweise Polyolefine oder Polyurethane, beschichtet sind. Das Patent US 7,624,802 beschreibt Stützmittel aus mit Phenolharz beschichteten Trägermaterialien aus der Gruppe der anorganischen oder organischen Materialien oder Komposite aus anorganischen und organischen Materialien. Die WO 2008/088449 A2 beschreibt Stützmittel mit einer Beschichtung aus Harz, Vernetzer, Haftvermittler und Härter. Aus der US 2014/0124200 A1 sind Stützmittel mit einer Beschichtung aus Silikon-modifizierten Formaldehydharzen bekannt. Die WO 2016/070044 A1 beschreibt ein Verfahren zur Behandlung von Stützmitteln mit einer Reihe von funktionellen Beschichtungen. Die WO 2016/089599 A1 beschreibt Stützmittel mit einer Beschichtung, welche Behandlungsmittel enthält.

Die Aufgabe der vorliegenden Erfindung war die Bereitstellung von Stützmitteln, welche sich zur Verwendung in Fracking-Förderverfahren für Erdöl und Erdgas eignen. Dabei sollten diese Stützmittel die notwendige Härte aufweisen und gleichzeitig elastische Eigenschaften zeigen, damit es möglichst wenig zu Bruch oder zu Abplatzungen der Beschichtung kommt. Bei Bruch oder Abplatzungen sollten die Bruchstücke Agglomerate bilden.

Gegenstand der Erfindung sind beschichtete Stützmittel für Fracking-Förderverfahren enthaltend ein anorganisches Trägermaterial und eine Beschichtung enthaltend Polymerisate von einem oder mehreren ethylenisch ungesättigten Monomeren aus der Gruppe enthaltend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide, dadurch gekennzeichnet, dass die Polymerisate erhalten werden mittels radikalisch initiierter Polymerisation in wässerigem Medium, wobei 0,5 bis 20 Gew.-% ethylenisch ungesättigte und Silangruppen enthaltende Monomere copolymerisiert werden, bezogen auf das Gesamtgewicht der Monomere.

Geeignete anorganische Trägermaterialien sind dem Fachmann aus dem Stand der Technik seit langem bekannt und können für die erfindungsgemäßen Stützmittel eingesetzt werden. Die Trägermaterialien sind üblicherweise Sand oder Gesteine wie Kalkstein, Marmor, Dolomit, Granit, aber auch Glasperlen, Keramikpartikel, Keramikkugeln und dergleichen, wobei diese Liste beispielhaft und nicht beschränkend ist. Bevorzugt zeigen die Trägerpartikel eine im Wesentlichen kugelförmige Form, da diese Form genügend Zwischenraum lässt, damit das Rohöl oder Gas vorbeiströmen kann. Sand, Glasperlen und Glashohlkugeln (sogenannte Microballons) werden als Trägermaterialien bevorzugt. Besonders bevorzugt wird Sand als Trägermaterial verwendet. Bevorzugt weisen die Trägermaterialteilchen einen durchschnittliche Durchmesser von 50 bis 5000 µm auf, besonders bevorzugt einen durchschnittlichen Durchmesser von 100 bis 1500 µm.

Die Beschichtung der Trägermaterialien enthält Polymerisate von einem oder mehreren ethylenisch ungesättigten Monomeren aus der Gruppe enthaltend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide. Bevorzugte Vinylester sind Vinylacetat, Vinylpropionat, Vinylbutyrat, Vinyl-2-ethylhexanoat, Vinyllaurat, 1-Methyl-vinylacetat, Vinylpivalat und Vinylester von alpha-verzweigten Monocarbonsäuren mit 9 bis 13 C-Atomen, beispielsweise VeoVa9® oder VeoVa10® (Handelsnamen der Firma Momentive). Besonders bevorzugt ist Vinylacetat. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat. Beispiele für Olefine und Diene sind Ethylen, Propylen und 1,3-Butadien. Geeignete Vinylaromaten sind Styrol und Vinyltoluol. Ein bevorzugtes Vinylhalogenid ist Vinylchlorid.

Bei den ethylenisch ungesättigten und Silangruppen enthaltenden Monomeren handelt es sich um Monomere mit der allgemeinen Formel RSi(CH₃)₀₋₂(OR¹)₃₋₁, wobei R die Bedeutung CH₂=CR²-(CH₂)₀₋₁ oder CH₂=CR²CO₂-(CH₂)₁₋₃ hat, R¹ ein unverzweigter oder verzweigter, gegebenenfalls substituierter Alkylrest mit 1 bis 12 C-Atomen ist, der gegebenenfalls durch eine Ethergruppe unterbrochen sein kann, und R² für H oder CH₃ steht.

Bevorzugt sind Silane der Formeln CH₂=CR²-(CH₂)₀₋₁Si(CH₃)₀₋₁(OR¹)₃₋₂ und CH₂=CR²CO₂-(CH₂)₃Si(CH₃)₀₋₁(OR¹)₃₋₂, wobei R¹ ein verzweigter oder unverzweigter Alkylrest mit 1 bis 8 C-Atomen ist und R² für H oder CH₃ steht.

Besonders bevorzugte ethylenisch ungesättigte Silane sind Vinylmethyldimethoxysilan, Vinyltrimethoxysilan, Vinylmethyldiethoxysilan, Vinyltriethoxysilan, Vinyltri(2-methoxyethoxy)-silan, *γ*-Methacryloxypropyltrimethoxysilan, *γ*-Methacryloxypropyltriethoxysilan, *γ*-Acryloxypropyltrimethoxysilan, *γ*-Acryloxypropyltriethoxysilan.

Die genannten ethylenisch ungesättigten Silanverbindungen können gegebenenfalls auch in Form ihrer (Teil)hydrolysate vorliegen.

Vorzugsweise werden noch 0,05 bis 20 Gew.-%, besonders bevorzugt 0,1 bis 10 Gew.-%, bezogen auf das Gesamtgewicht der Monomere, ein oder mehrere funktionelle Comonomere copolymerisiert. Beispiele für funktionelle Comonomere sind ethylenisch ungesättigte Mono- und Dicarbonsäuren, vorzugsweise Acrylsäure, Methacrylsäure, Fumarsäure und Maleinsäure sowie Maleinsäureanhydrid; ethylenisch ungesättigte Carbonsäureamide und -nitrile, vorzugsweise Acrylamid und Acrylnitril; ethylenisch ungesättigte Sulfonsäuren bzw. deren Salze, vorzugsweise Vinylsulfonsäure, 2-Acrylamido-2-methyl-propansulfonsäure. Beispiele für funktionelle Comonomere sind auch epoxidfunktionelle Comonomere wie Glycidylmethacrylat und Glycidylacrylat. Als Beispiele für funktionelle Comonomere genannt seien auch Monomere mit Hydroxy-Gruppen, beispielsweise Methacrylsäurehydroxyalkylester und Acrylsäurehydroxyalkylester wie Hydroxyethyl- oder Hydroxypropyl- oder Hydroxybutylacrylat oder -methacrylat. Bevorzugt werden ethylenisch ungesättigte Mono- und Dicarbonsäuren.

Bevorzugt werden die Polymerisate von Vinylestern, insbesondere Vinylacetat, mit 0,5 bis 20 Gew.-% von ethylenisch ungesättigten und Silangruppen enthaltenden Monomeren, wie Vinyltrimethoxysilan, Vinyltriethoxysilan, Vinylmethyldimethoxysilan oder Vinylmethyldiethoxysilan, und gegebenenfalls 0,1 bis 10 Gew.-% von ethylenisch ungesättigten Carbonsäuren, wie Acrylsäure oder Methacrylsäure,
wobei die Polymerisate gegebenenfalls jeweils noch 5 bis 45 Gew.-% ein oder mehrere Monomereinheiten enthalten können, aus der Gruppe umfassend zu den copolymerisierten Vinylestern verschiedene Vinylester von unverzweigten oder verzweigten Alkylcarbonsäuren mit 3 bis 15 C-Atomen, Methacrylsäureester und Acrylsäureester von Alkoholen mit 1 bis 15 C-Atomen, Styrol, Ethylen, Butadien und Vinylchlorid, und wobei sich die Angaben in Gew.-% auf jeweils 100 Gew.-% aufaddieren.

Bevorzugt werden auch die Polymerisate von (Meth)acrylsäureestern von Alkoholen mit 1 bis 15 C-Atomen, wie Methyl(meth)acrylat und/oder n-Butyl(meth)acrylat, mit 0,5 bis 20 Gew.-% von ethylenisch ungesättigten und Silangruppen enthaltenden Monomeren, wie Vinyltrimethoxysilan, Vinyltriethoxysilan, Vinylmethyldimethoxysilan oder Vinylmethyldiethoxysilan, und gegebenenfalls 0,1 bis 10 Gew.-% von ethylenisch ungesättigten Carbonsäuren, wie Acrylsäure oder Methacrylsäure, und gegebenenfalls 0,1 bis 50 Gew.-%, vorzugsweise 5 bis 30 Gew.-% Styrol;
wobei sich die Angaben in Gew.-% auf jeweils 100 Gew.-% aufaddieren.

Die Monomerauswahl bzw. die Auswahl der Gewichtsanteile der Comonomere erfolgt dabei so, dass im Allgemeinen eine Glasübergangstemperatur Tg von +10°C bis +100°C resultiert. Die Glasübergangstemperatur Tg der Polymerisate kann in bekannter Weise mittels DSC (Dynamische Differenz-Thermoanalyse, DIN EN ISO 11357-1/2), beispielsweise mit dem dynamischen Differenzkalorimeter DSC1 der Firma Mettler-Toledo im offenen Tiegel bei einer Heizrate von 10 K/min bestimmt werden. Als Glasübergangstemperatur wird im Wärmeflussdiagramm die Temperatur am Mittelpunkt der Stufe (Mittelpunkt = halbe Stufenhöhe der Stufe des Wärmeflusses) der zweiten Aufheizkurve ausgewertet. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Polymerisate können mittels dem Emulsionspolymerisationsverfahren hergestellt werden, wie beispielsweise in der Encyclopedia of Polymer Science and Engineering, Vol. 8, Seiten 659 bis 677, John Wiley and Sons, Inc., 1987 oder in der DE 102006050336 A1 beschrieben. Dabei werden die ethylenisch ungesättigten Monomere im wässerigen Medium in Gegenwart von Emulgator und/oder Schutzkolloid mittels radikalisch initiierter Polymerisation polymerisiert. Es werden wässerige Dispersionen der Polymerisate erhalten, vorzugsweise mit einem Feststoffgehalt von 40 bis 70 %.

Die Polymerisate für die Beschichtung können auch als Kompositpartikel aus dem organischen Polymerisat und wenigstens einem anorganischen Feststoff eingesetzt werden, wobei der Gewichtsanteil an anorganischem Feststoff 15 bis 40 Gew.-% beträgt, bezogen auf das Gesamtgewicht an organischem Polymerisat und anorganischem Feststoff im Kompositpartikel.

Kompositpartikel sind Stand der Technik und sind im Handel erhältlich und können in Form deren wässerigen Dispersionen oder als in Wasser dispergierbare Polymerpulver vorliegen. Kompositpartikel umfassen eine organische Polymerphase und darin verteilte, feinteilige, anorganische Feststoffpartikel, welche vorzugsweise über physikalische Bindungen (beispielsweise über carboxylfunktionelle Monomereinheiten im Polymer) oder über chemische Bindungen (beispielsweise über siliciumfunktionelle Monomereinheiten im Polymer) mit den Polymerketten der organischen Polymerphase verknüpft sind.

Als feinteilige, anorganische Feststoffpartikel werden Metalloxide oder Halbmetalloxide bevorzugt. Vorzugsweise mit einer Teilchengröße der in Wasser dispergierten Feststoffpartikel von 4 bis 150 nm, besonders bevorzugt 5 bis 100 nm. Die Teilchengröße ist die gewichtsmittlere Teilchengröße dw, bestimmt mittels statistischer Lichtstreumessung, beispielsweise mit dem Nanosizer der Firma Coulter.

Geeignete Metalloxide sind beispielsweise die Oxide von Titan, Zirkonium, Aluminium, Barium, Magnesium oder Eisen. Solche Metalloxide sind im Handel erhältlich, beispielsweise Titandioxid, Zirkonium-(IV)-oxid, Zinn-(II)-oxid, Zinn-(IV)-oxid, Aluminiumoxid, Hydroxyaluminiumoxid, Bariumoxid, Magnesiumoxid, Eisen-(II)-oxid, Eisen-(III)-oxid, Eisen-(II/III)-oxid. Als bevorzugtes Halbmetalloxid sei Siliziumdioxid genannt. Siliziumdioxid kann in amorpher Form und/oder in unterschiedlichen Kristallstrukturen vorliegen. Siliziumdioxid kann beispielsweise in Form von Wasserglas oder Silika-Solen vorliegen. Geeignetes Siliziumdioxid ist auch unter den Handelsnamen Aerosil®, Nalco®, Levasil®, Ludox®, Nyacol®, Bindzil® und Snowtex® bekannt. Besonders bevorzugt werden Silika-Sole und mit Aluminat oder Epoxysilan modifizierte Silika-Sole. Zur Herstellung der modifizierten Silika-Sole wird entweder eine wässerige Aluminatlösung, beispielsweise NaAl(OH)₄, oder ein Epoxysilan, beispielsweise 3-Glycidoxypropyl-trimethoxysilan, unter Rühren und gegebenenfalls unter Erhitzen zu einem herkömmlichen Silika-Sol gegeben.

Die Herstellung der feinteiligen anorganischen Feststoffe ist dem Fachmann bekannt und erfolgt beispielsweise durch Fällungsreaktionen oder chemische Reaktionen in der Gasphase (vgl. hierzu E. Matijevic, Chem. Mater. 1993, 5, Seiten 412 bis 426; Ullmann's Encyclopedia of Industrial Chemistry, Vol. A 23, Seiten 583 bis 660, Verlag Chemie, Weinheim, 1992.

Die Herstellung der Kompositpartikel enthaltend ein organisches Polymerisat und feinteilige, anorganische Feststoffpartikel kann mittels der oben als Stand der Technik genannten Verfahren erfolgen. Dabei werden die feinteiligen, anorganischen Feststoffpartikel vorzugsweise in Form einer stabilen, wässerigen Feststoffdispersion eingesetzt.

Vorzugsweise wird eine die feinteiligen, anorganischen Feststoffe enthaltende, wässerige Dispersion während der Polymerisation bei der Herstellung des organischen Polymerisats zugegeben oder zur fertigen Polymerisatdispersion zugegeben. Bevorzugt wird auch ein Verfahren bei dem eine wässerige Dispersion der feinteiligen, anorganischen Feststoffe mit der Polymerisatdispersion gemischt wird, so dass eine chemische oder physikalische Bindung zwischen den anorganischen und den organischen Teilchen stattfinden kann.

Ebenfalls bevorzugt wird ein Verfahren bei dem man eine feinteilige, anorganische Feststoffe enthaltende, wässerige Dispersion mit einer wässerigen Polymerisatdispersion, und mit einer Epoxysilanverbindung, beispielsweise 3-Glycidoxypropyltrimethoxysilan oder 3-Glycidoxypropylmethyldiethoxysilan, vermischt. Die genannten Mischungsvorgänge werden vorzugsweise bei einer Temperatur von 20°C bis 70°C über einen Zeitraum von vorzugsweise 1 bis 12 Stunden durchgeführt.

Die Kompositpartikel haben zumindest teilweise eine Kern-Schale-Struktur. Darin bilden die anorganischen Partikel einen Kern und die polymeren Ketten eine Schale. Der Gewichtsanteil an anorganischem Feststoff in den Kompositpartikeln beträgt 15 bis 45 Gew.-%, bezogen auf das Gesamtgewicht an organischem Polymerisat und anorganischem Feststoff im Kompositpartikel.

Die so erhältlichen Kompositpartikel liegen im Allgemeinen in Form einer wässerigen Dispersion vor, vorzugsweise mit einem Feststoffgehalt von 40 bis 70 %, besonders bevorzugt von 45 bis 65 % und am meisten bevorzugt von 50 bis 60 %.

Ein weiterer Gegenstand der vorliegenden Erfindung ist das Verfahren zur Herstellung von erfindungsgemäß beschichteten Stützmitteln.

Dem Fachmann sind diverse Möglichkeiten zur Beschichtung von Stützmitteln aus dem Stand der Technik bekannt. Diese Verfahren können auch für die Beschichtung von Stützmitteln mit den vorliegenden Polymerisaten eingesetzt werden. In einer bevorzugten Ausführungsform wird das Polymerisat als wässerige Polymerdispersion oder als wässerige Kompositdispersion auf das anorganische Trägermaterial aufgebracht, beispielsweise durch Tränken oder Sprühen oder Mischen und anschließend getrocknet. Bei der Auftragung der Beschichtung können auch noch Additive zugegeben werden, beispielsweise Haftvermittler, Antistatikmittel. Die Auftragung und Trocknung erfolgt vorzugsweise bei einer Temperatur von 20°C bis 50°C.

Bei den beschichteten Stützmitteln kann die Oberfläche des Stützmittels ganz oder teilweise beschichtet sein. Bevorzugt erscheinen bei der Untersuchung mit dem Rasterelektronenmikroskop mindesten 50 % der sichtbaren Oberfläche des anorganischen Trägermaterials mit dem Polymerisat beschichtet, besonders bevorzugt mindestens 95 %. Die Beschichtung auf dem Trägermaterial ist 0,1 bis 100 µm dick, bevorzugt 0,1 bis 30 µm. Bevorzugt sind die beschichteten Stützmittel mit weniger als drei Schichten beschichtet, besonders bevorzugt mit nur einer Schicht.

Die Beschichtung wird im Allgemeinen in einer Menge von 0,1 bis 10 Gew.-%, bevorzugt von 0,5 bis 5 Gew.-% und besonders bevorzugt von 0,5 bis 2 Gew.-% auf das anorganische Trägermaterial aufgetragen, jeweils bezogen auf das Gesamtgewicht des Stützmittels.

Ein weiterer Gegenstand der vorliegenden Erfindung ist die Verwendung der beschichteten Stützmittel in Fracking-Förderverfahren für Erdöl und Erdgas.

Die Vorteile der erfindungsgemäßen beschichteten Stützmittel lassen sich folgendermaßen zusammenfassen:
Im Unterschied zu den beschichteten Stützmitteln aus dem Stand der Technik können die Polymerisate in Form deren wässerigen Polymerdispersionen bei wesentlich niederen Temperaturen aufgetragen werden und getrocknet werden, da diese im Unterschied zu vernetzenden Systemen nicht hitzehärtend sind, sondern die Filmbildung über Koaleszenz erfolgt. Im Unterschied zu vernetzenden Novolak-Beschichtungen erfolgt die Aushärtung oder Trocknung auch ohne Freisetzung von VOCs wie Formaldehyd.

Die wässerigen Dispersionen der Polymerisate oder der Polymerisat-Komposite haben eine relativ niedere Viskosität und spreiten daher wesentlich besser bei der Auftragung der Beschichtung. Dadurch werden Oberflächen gleichmäßiger beschichtet und es können glattere Oberflächen erhalten werden.

Die beschichteten Stützmittel weisen eine verbesserte Elastizität und Verformbarkeit bei gleicher Härte auf. Dadurch sind die Stützmittel widerstandsfähiger gegenüber Belastungen, wie Schlägen, Verformung oder Druck und haben eine geringere Neigung zu brechen. Herkömmliche Stützmittel gemäß dem Stand der Technik sind sehr spröde und haben eine große Neigung zu brechen. Durch Bruch des Stützmittels werden Feinanteile freigesetzt. Eine Freisetzung der Feinanteile wirkt sich negativ auf die Durchströmrate des Rohöls oder Gases aus, weil die Zwischenräume zwischen den Stützmittel-Körner verstopft werden. Mit den erfindungsgemäß beschichteten Stützmittel agglomerieren dagegen die Feinanteile bei Bruch und die Freisetzung von Feinanteilen wird verhindert, zumindest drastisch reduziert.

Durch diese vorteilhaften Eigenschaften der erfindungsgemäß beschichteten Stützmittel kann der Öl- bzw. Gasfluss länger aufrechterhalten werden. Daraus ergeben sich entscheidende wirtschaftliche Vorteile und im Umweltschutz.

Die nachfolgenden Beispiele erläutern die Erfindung, ohne dabei beschränkend zu wirken.

### Beispiel 1 (Polymerisatdispersion 1):

In einem Reaktor mit 3 Liter Volumen wurden 1.0 g deionisiertes Wasser, 4,6 g Natriumlaurylsulfat, 1,4 g Kaliumperoxodisulfat in einer Stickstoffatmosphäre vorgelegt und unter Rühren auf 40°C erwärmt. Bei dieser Temperatur wurde eine Mischung folgender Zusammensetzung in den Reaktor gegeben:

| | |
|---|---|
| Vinyltriethoxysilan | 0,8 g |
| Methacrylsäure | 8,5 g |
| Butylacrylat | 100,8 g |
| Dodecylmercaptan | 0,3 g |
| Methylmethacrylat | 40,7 g |
| Styrol | 18,7 g |

Anschließend wurde die Temperatur auf 80°C erhöht und. Nach Erreichen dieser Temperatur wurde die Initiatorlösung (1,4 g Kaliumperoxodisulfat in 86,8 g Wasser) innerhalb von 3 Stunden zudosiert, gleichzeitig wurde separat während 2,5 Stunden eine Lösung mit folgender Zusammensetzung in den Reaktor gegeben:

| | |
|---|---|
| Vinyltriethoxysilan | 3,7 g |
| Methacrylsäure | 37,1 g |
| Butylacrylat | 440,8 g |
| Dodecylmercaptan | 1,48 g |
| Methylmethacrylat | 177,8 g |
| Styrol | 81,5 g |

Nach Ende der Dosierungen wurde 2 Stunden bei 80°C und 1 Stunde bei 85°C gerührt.

Anschließend wurde die Polymerdispersion mit Wasser verdünnt und mit einer wässrigen Ammoniaklösung (12,5 %-ig) der pH-Wert auf 9 eingestellt. Es wurde eine Polymerlösung mit einem Festgehalt (DIN EN ISO 3251) von 43,0 Gew.-% erhalten. Die Mindestfilmbildungstemperatur (DIN ISO 2115) lag bei 5°C.

### Beispiel 2 (Kompositdispersion 2):

In einem Doppelmantelreaktor wurden bei 50°C unter Rühren 1000 g der 43 %-igen, wässerigen Polymerisatdispersion 1 vorgelegt und 460 g eines wässerigen Silikasols (Festgehalt 40 %, Bindzil 2040 von Akzo Nobel) zugegeben.

Die so erhaltene Dispersion hatte einen Feststoffgehalt von 42,7 % und einen Silikagehalt von 30 Gew.-%, bezogen auf den Gesamtfeststoffgehalt.

### Herstellung von beschichteten Stützmittel:

In einem Lödige-Mischer wurden auf einen 12/18 bzw. einen 20/40 mesh Fracking-Sand jeweils 2 Gew.-%, bezogen auf Sand, der Dispersionen aus den Beispielen 1 und 2 mittels einer Düse aufgesprüht und bei 80°C getrocknet.

Untersuchung der Beschichtungsgüte von Fracking-Sand mittels Elektronenmikroskop (REM):
Es wurde jeweils eine Oberflächenbelegung von > 95% erreicht.

Untersuchung der Druckstabilität von beschichteten Stützmitteln:
Die Druckstabilität der beschichteten Stützmittel wurde jeweils nach DIN EN ISO 13503-2 bei 7500 psi (517 bar) und 10000 psi (690 bar) Druck untersucht.

Die Ergebnisse sind in Tabelle 1 und 2 aufgezeigt.

**Tabelle 1:**

| Fracking-Sand 12/18 beschichtet mit Dispersion aus Beispiel | Menge gebildeter Feinanteil in % | |
|---|---|---|
| | bei 7500 psi (517 bar) | bei 10000 psi (690 bar) |
| 1 | 7 % | 12 % |
| 2 | 3 % | 8 % |
| Vergleichsbeispiel unbeschichteter Sand 12/18 | 15 % | 22 % |

**Tabelle 2:**

| Fracking-Sand 20/40 beschichtet mit Dispersion aus Beispiel | Menge gebildeter Feinanteil in % | |
|---|---|---|
| | bei 7500 psi (517 bar) | bei 10000 psi (690 bar) |
| 1 | 3 % | 6 % |
| 2 | 1 % | 3 % |
| Vergleichsbeispiel unbeschichteter Sand 20/40 | 6 % | 10 % |

Mit den erfindungsgemäßen Stützmitteln resultiert jeweils ein deutlich geringerer Feinanteil nach Druckbelastung.

## Patentansprüche

1. Beschichtete Stützmittel für Fracking-Förderverfahren enthaltend ein anorganisches Trägermaterial und eine Beschichtung enthaltend Polymerisate von einem oder mehreren ethylenisch ungesättigten Monomeren aus der Gruppe enthaltend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide, **dadurch gekennzeichnet, dass** die Polymerisate erhalten werden mittels radikalisch initiierter Polymerisation in wässerigem Medium, wobei 0,5 bis 20 Gew.-% ethylenisch ungesättigte und Silangruppen enthaltende Monomere copolymerisiert werden, bezogen auf das Gesamtgewicht der Monomere.

2. Beschichtete Stützmittel gemäß Anspruch 1, **dadurch gekennzeichnet, dass** es sich bei den ethylenisch ungesättigten und Silangruppen enthaltenden Monomeren um Monomere handelt mit der allgemeinen Formel RSi(CH₃)₀₋₂(OR¹)₃₋₁, wobei R die Bedeutung CH₂=CR²-(CH₂)₀₋₁ oder CH₂=CR²CO₂-(CH₂)₁₋₃ hat, R¹ ein unverzweigter oder verzweigter, gegebenenfalls substituierter Alkylrest mit 1 bis 12 C-Atomen ist, der gegebenenfalls durch eine Ethergruppe unterbrochen sein kann, und R² für H oder CH₃ steht.

3. Beschichtete Stützmittel gemäß Anspruch 1 oder 2, **dadurch gekennzeichnet, dass** die Beschichtung Polymerisate enthält von Vinylestern und 0,5 bis 20 Gew.-% von ethylenisch ungesättigten und Silangruppen enthaltenden Monomeren, und gegebenenfalls 0,1 bis 10 Gew.-% von ethylenisch ungesättigten Carbonsäuren, wobei die Polymerisate gegebenenfalls jeweils noch 5 bis 45 Gew.-% ein oder mehrere Monomereinheiten enthalten können, aus der Gruppe umfassend zu den copolymerisierten Vinylestern verschiedene Vinylester von unverzweigten oder verzweigten Alkylcarbonsäuren mit 3 bis 15 C-Atomen, Methacrylsäureester und Acrylsäureester von Alkoholen mit 1 bis 15 C-Atomen, Styrol, Ethylen, Butadien und Vinylchlorid, und wobei sich die Angaben in Gew.-% auf jeweils 100 Gew.-% aufaddieren.

4. Beschichtete Stützmittel gemäß Anspruch 1 oder 2, **dadurch gekennzeichnet, dass** die Beschichtung Polymerisate enthält von (Meth)acrylsäureestern von Alkoholen mit 1 bis 15 C-Atomen und 0,5 bis 20 Gew.-% von ethylenisch ungesättigten und Silangruppen enthaltenden Monomeren, und gegebenenfalls 0,1 bis 10 Gew.-% von ethylenisch ungesättigten Carbonsäuren, und gegebenenfalls 0,1 bis 50 Gew.-%, vorzugsweise 5 bis 30 Gew.-% Styrol; wobei sich die Angaben in Gew.-% auf jeweils 100 Gew.-% aufaddieren.

5. Beschichtete Stützmittel gemäß Anspruch 1 oder 2, **dadurch gekennzeichnet, dass** die Beschichtung Polymerisate in Form von Kompositpartikeln aus dem organischen Polymerisat und wenigstens einem anorganischen Feststoff enthält, wobei der Gewichtsanteil an anorganischem Feststoff 15 bis 40 Gew.-% beträgt, bezogen auf das Gesamtgewicht an organischem Polymerisat und anorganischem Feststoff im Kompositpartikel.

6. Beschichtete Stützmittel gemäß Anspruch 5, **dadurch gekennzeichnet, dass** als anorganische Feststoffpartikel Metalloxide oder Halbmetalloxide enthalten sind.

7. Beschichtete Stützmittel gemäß Anspruch 1 bis 6, **dadurch gekennzeichnet, dass** als anorganische Trägermaterialien Sand, Gesteine, Glasperlen, Keramikpartikel oder Keramickugeln eingesetzt werden.

8. Beschichtete Stützmittel gemäß Anspruch 1 bis 7, **dadurch gekennzeichnet, dass** die Trägermaterialteilchen einen durchschnittliche Durchmesser von 50 bis 5000 µm aufweisen.

9. Verfahren zur Herstellung von beschichteten Stützmitteln gemäß Anspruch 1 bis 8, **dadurch gekennzeichnet, dass** das Polymerisat als wässrige Polymerdispersion oder als wässerige Kompositdispersion auf das anorganische Trägermaterial aufgebracht wird und anschließend getrocknet wird.

10. Verwendung der beschichteten Stützmittel gemäß Anspruch 1 bis 8 in Fracking-Förderverfahren für Erdöl und Erdgas.

## Claims

1. Coated proppant for fracking production methods, comprising an inorganic carrier material and a coating comprising polymers of one or more ethylenically unsaturated monomers from the group containing vinyl esters of unbranched or branched alkylcarboxylic acids having 1 to 15 carbon atoms, methacrylic esters and acrylic esters of alcohols having 1 to 15 carbon atoms, vinylaromatics, olefins, dienes, and vinyl halides, **characterized in that** the polymers are obtained by radically initiated polymerization in aqueous medium, where 0.5 to 20 wt% of ethylenically unsaturated monomers comprising silane groups are copolymerized, based on the total weight of the monomers.

2. Coated proppant according to Claim 1, **characterized in that** the ethylenically unsaturated monomers comprising silane groups are monomers with the general formula RSi(CH₃)₀₋₂(OR¹)₃₋₁, where R has the definition CH₂=CR²-(CH₂)₀₋₁ or CH₂=CR²CO₂-(CH₂)₁₋₃, R¹ is an unbranched or branched, optionally substituted alkyl radical having 1 to 12 carbon atoms and may optionally be interrupted by an ether group, and R² is H or CH₃.

3. Coated proppant according to Claim 1 or 2, **characterized in that** the coating comprises polymers of vinyl esters and 0.5 to 20 wt% of ethylenically unsaturated monomers comprising silane groups, and optionally 0.1 to 10 wt% of ethylenically unsaturated carboxylic acids, where the polymers may optionally in each case also include 5 to 45 wt% of one or more monomer units from the group encompassing vinyl esters - different to the copolymerized vinyl esters - of unbranched or branched alkyl carboxylic acids having 3 to 15 carbon atoms, methacrylic esters and acrylic esters of alcohols having 1 to 15 carbon atoms, styrene, ethylene, butadiene, and vinyl chloride, and where the figures in wt% add up to 100 wt% in each case.

4. Coated proppant according to Claim 1 or 2, **characterized in that** the coating comprises polymers of (meth)acrylic esters of alcohols having 1 to 15 carbon atoms and 0.5 to 20 wt% of ethylenically unsaturated monomers comprising silane groups, and optionally 0.1 to 10 wt% of ethylenically unsaturated carboxylic acids, and optionally 0.1 to 50 wt%, preferably 5 to 30 wt%, of styrene; where the figures in wt% add up to 100 wt% in each case.

5. Coated proppant according to Claim 1 or 2, **characterized in that** the coating comprises polymers in the form of composite particles composed of the organic polymer and at least one inorganic solid, where the weight fraction of inorganic solid is 15 to 40 wt%, based on the total weight of organic polymer and inorganic solid in the composite particle.

6. Coated proppant according to Claim 5, **characterized in that** inorganic solid particles included are metal oxides or semimetal oxides.

7. Coated proppant according to Claims 1 to 6, **characterized in that** inorganic carrier materials used are sand, rocks, glass beads, ceramic particles or ceramic spheres.

8. Coated proppant according to Claims 1 to 7, **characterized in that** the carrier material particles have an average diameter of 50 to 5000 µm.

9. Method for producing coated proppants according to Claims 1 to 8, **characterized in that** the polymer is applied as an aqueous polymer dispersion or as an aqueous composite dispersion to the inorganic carrier material and is subsequently dried.

10. Use of the coated proppants according to Claims 1 to 8 in fracking production methods for mineral oil and natural gas.

## Revendications

1. Agents de soutènement revêtus pour des procédés de gestion de fracturation hydraulique contenant un matériau support inorganique et un revêtement contenant des polymères d'un ou de plusieurs monomères éthyléniquement insaturés du groupe contenant les esters vinyliques d'acides alkylcarboxyliques non ramifiés ou ramifiés comprenant 1 à 15 atomes de carbone, les esters méthacryliques et les esters acryliques d'alcools comprenant 1 à 15 atomes de carbone, les aromatiques de vinyle, les oléfines, les diènes et les halogénures de vinyle, **caractérisés en ce que** les polymères sont obtenus par polymérisation initiée par voie radicalaire dans un milieu aqueux, 0,5 à 20% en poids de monomères éthyléniquement insaturés et contenant des groupes silane étant copolymérisés, par rapport au poids total des monomères.

2. Agents de soutènement revêtus selon la revendication 1, **caractérisés en ce qu'**il s'agit, pour les monomères éthyléniquement insaturés et contenant des groupes silane, de monomères présentant la formule générale RSi (CH₃)₀₋₂(OR¹)₃₋₁, R présentant la signification CH₂=CR²-(CH₂)₀₋₁ ou CH₂=CR²CO₂-(CH₂)₁₋₃, R¹ représentant un radical alkyle non ramifié ou ramifié, le cas échéant substitué, comprenant 1 à 12 atomes de carbone, qui peut le cas échéant être interrompu par un groupe éther et R² représentant H ou CH₃.

3. Agents de soutènement revêtus selon la revendication 1 ou 2, **caractérisés en ce que** le revêtement contient des polymères d'esters de vinyle et de 0,5 à 20% en poids de monomères éthyléniquement insaturés et contenant des groupes silane et le cas échéant de 0,1 à 10% en poids d'acides carboxyliques éthyléniquement insaturés, les polymères pouvant le cas échéant contenir à chaque fois encore 5 à 45% en poids d'un ou de plusieurs motifs monomères du groupe comprenant les esters vinyliques, différents des esters vinyliques copolymérisés, d'acides alkylcarboxyliques non ramifiés ou ramifiés comprenant 3 à 15 atomes de carbone, les esters méthacryliques et acryliques d'alcools comprenant 1 à 15 atomes de carbone, le styrène, l'éthylène, le butadiène et les chlorures de vinyle et la somme des indications en % en poids valant à chaque fois 100% en poids.

4. Agents de soutènement revêtus selon la revendication 1 ou 2, **caractérisés en ce que** le revêtement contient des polymères d'esters (méth)acryliques d'alcools comprenant 1 à 15 atomes de carbone et de 0,5 à 20% en poids de monomères éthyléniquement insaturés et contenant des groupes silane et le cas échéant de 0,1 à 10% en poids d'acides carboxyliques éthyléniquement insaturés et le cas échéant de 0,1 à 50% en poids, de préférence de 5 à 30% en poids de styrène ; la somme des indications en % en poids valant à chaque fois 100% en poids.

5. Agents de soutènement revêtus selon la revendication 1 ou 2, **caractérisés en ce que** le revêtement contient des polymères sous forme de particules composites du polymère organique et d'au moins un solide inorganique, la proportion pondérale du solide inorganique étant de 15 à 40% en poids, par rapport au poids total de polymère organique et de solide inorganique dans la particule composite.

6. Agents de soutènement revêtus selon la revendication 5, **caractérisés en ce que** des oxydes métalliques ou des oxydes semi-métalliques sont contenus comme particules solides inorganiques.

7. Agents de soutènement revêtus selon la revendication 1 à 6, **caractérisés en ce que** du sable, de la caillasse, les perles de verre, des particules céramiques ou des billes céramiques sont utilisés comme matériaux support inorganiques.

8. Agents de soutènement revêtus selon la revendication 1 à 7, **caractérisés en ce que** les particules de matériau support présentent un diamètre moyen de 50 à 5000 µm.

9. Procédé pour la préparation d'agents de soutènement revêtus selon la revendication 1 à 8, **caractérisé en ce que** le polymère est appliqué sur le matériau support inorganique sous forme de dispersion aqueuse de polymère ou sous forme de dispersion aqueuse de composite et ensuite séché.

10. Utilisation des agents de soutènement revêtus selon la revendication 1 à 8, dans des procédés de gestion de fracturation hydraulique pour le pétrole et le gaz naturel.
